# EUROPEAN PATENT APPLICATION

(11) **EP 2 983 033 A1**
(43) Date of publication of application: **10.02.2016**
(21) Application number: 15179743.8
(22) Date of filing: 04.08.2015
(51) Int. Cl.: G02B 27/09, G02B 19/00, G02B 27/20, G01C 15/00, G06K 7/00

(54) **LASER PROJECTOR FOR A CREATION OF A STRIP OF LIGHT**

(30) Priority: 04.08.2014 SK 500992014 U
(71) Applicant: KVANT spol. s r.o., Kramare 83101 Bratislava 37 (SK)
(72) Inventor: KUBO EK, Pavol, 83101 Bratislava 37 (SK); DUBEC, Victor, 83101 Bratislava 37 (SK)
(74) Representative: Grünecker Patent- und Rechtsanwälte PartG mbB

(57) **Abstract**

Laser projector for creation of a strip of light comprises at least five laser diodes (1.1 to 1.5) whose beams pass through an optical system comprising aspherical lenses (4), planar mirrors (5) and convex mirror (2) for increasing of divergence of incident laser beams. The exact divergence of each beam along the created strip and point of incidence of each beam on the plane (3) depends on point of incidence of the beam on the convex mirror (2). This point can be adjusted by rotating of corresponding planar mirrors (5). The width (x) of each beam can be adjusted by setting the distance between a diode and corresponding aspherical lens (4). This way a strip of light with defined dimensions and location, sharp edges and homogeneously distributed light intensity can be created.

## Description

Hereby presented invention relates to creation of a homogenous strip of light with defined dimensions by laser projector.

### BACKGROUND OF THE INVENTION

Currently strips of light can be created by laser as well as non-laser projectors. Edges of the strips created by non-laser projector are usually less sharp (more blurred) than those created by laser projectors. Laser projectors are also generally smaller and more energetically effective. Laser projectors that are currently used for creation of strips of lights, e. g. in industrial product lines, are usually rather low-power devices with power in orders of milliwatts. However, some applications demand higher powered devices and construction of these requires non-standard approaches.

In the state-of-the-art line generators a cylindrical lens system to create a line is used, or Powells lens, or rotating prizm, or diffraction structure, or oscillating scanning mirror or MEMS structure etc. All that solutions are well useful in case that the projection plane is located perpendicular to the optical axis of the light and the power of laser is relative low. None of that solution is suitable in case that the light source is located aside from the projection plane and a high strip intensity and homogeneity are needed over a large area.

### SUMMARY OF THE INVENTION

Listed disadvantages of contemporary devices can be eliminated by a special laser projector designed to project large and bright strip of light with sharp edges according to the present invention.

It is a particular approach of the present invention to generate the light stripes by using as a light source a plurality of laser diodes of which the light beams are reflected by a convex mirror towards the projection plane. As a mirror it is considered any surface that reflects the light partially or completely but does not diffuse the light (e.g. metallic mirror, dielectric mirror, polarizing elements, polished surface of material with high refractive index etc.) A beam of the i-th diode is reflected to project onto the projection plane a partial strip with a length yᵢ, which is determined by the point of incidence with the convex mirror and which grows with the distance of the projected partial strip from the diode. The partial strips are combined to form a resulting strip with a length y smaller than the sum of the partial strips yᵢ for all i (I being an integer between 1 and N; N being the number of diode sources producing respective N stripes, for 5 diode sources N=5). In other words, the strips overlap. The overlapping in the direction y between each two neighboring partial strips yₖ and yₖ₊₁ (k being an integer from 1 to N-1) also increases with the distance of the respective partial strips from the diodes.

According to an aspect of the present invention, alser projector for creation of a strip of light, that uses laser diodes as light sources wherein the laser beams of the diodes pass through optical system comprising aspherical lenses (4) and planar mirrors (5) characterized in that it comprises at least five laser diodes (1.1 to 1.5) and convex mirror (2) for increasing of divergence of incident laser beams and reflecting them to the plane of incidence (3) where they create small partial strips of light with lengths (*y*₁ to *y*₅) which together form the resulting strip of light with length (*y*) and points of incidence of particular light beams and their divergence are adjustable by adjusting their points of incidence on the convex mirror (2) by rotating the planar mirrors (5) and divergence of the beams in the dimension (*x*) is adjustable by setting the distance between aspherical lenses (4) and corresponding laser diodes (1.1 to 1.5).

Presented laser projector is useful for energetically and cost-effective creation of a strip of light with sharp edges and high and homogeneously distributed light intensity. A broad range of sizes, locations and dimensions of various shapes can be projected on variously oriented planes of incidence (3) without additional optical elements. Its main advantage is that is generates the strip with constant thickness and with regular homogeneous light intensity even if it is projected at relatively high inclined plane of incidence. The laser projector can be used mainly in construction lines, advertisement and sport and cultural events.

In the following exemplary embodiments are described in more detail with reference to the attached figures and drawings.
- Fig. 1: is a schematic drawing illustrating forming of the light stripes by a laser device (shown in cross-section);
- Fig. 2: is a schematic drawing illustrating forming of the light stripes by a laser device (shown in footprint);
- Fig. 3: is a schematic drawing illustrating a detail of one diode shown in Fig. 1 and 2;
- Fig. 4.: is a schematic drawing illustrating incidence of a stripe generated with a diode and a corresponding curved reflection mirror on a projection plane;
- Fig. 5: is a schematic drawing illustrating changing of the location of the strip by changing the orientation of the light beam; and
- Fig. 6: is a block diagram showing a laser device.
- Fig. 7: is a schematic drawing illustrating a detail of one diode shown in Fig. 4

### DETAILED DESCRIPTION

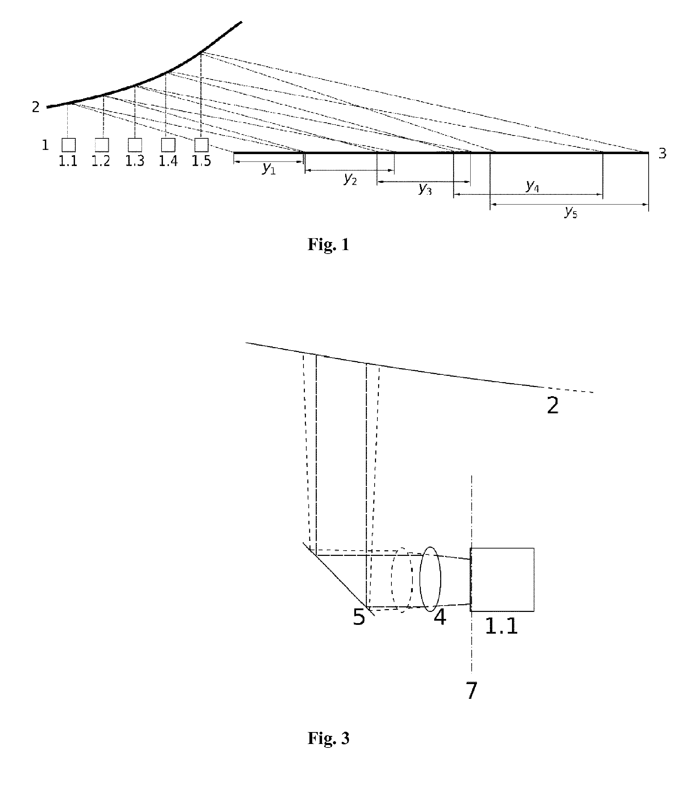

The present invention provides a laser projector. An example thereof can be seen in Fig. 1.

Fig. 1 shows a cross-section of the laser projector for creation of a strip of light. The light beams of laser diodes (1.1 to 1.5) are incident to the convex mirror (2) and after reflection they are incident to the plane (3) where strip of light with sharp edges is created. Along the created strip of light the beams of diodes (1.1 to 1.5) have dimensions (*y*₁ *to y*₅).

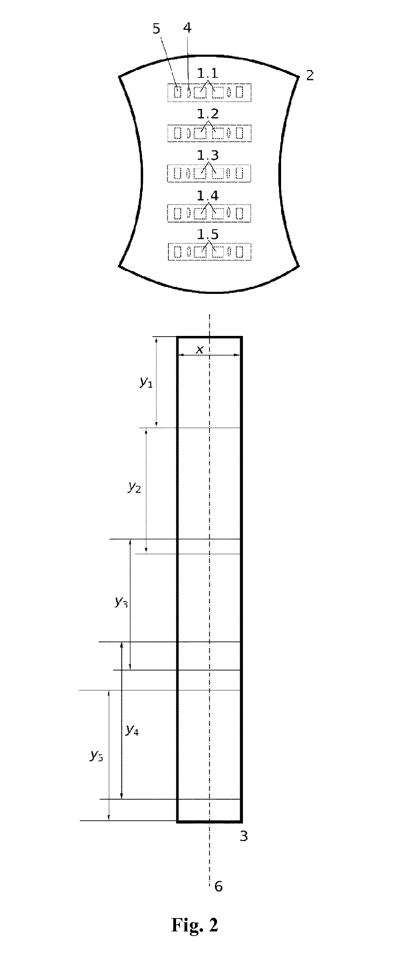

Fig. 2 shows an exemplary footprint of the laser projector for creation of strip of light shown in Fig. 1. Laser diodes (1.1 to 1.5) are organized in two rows, each containing five diodes. Aspherical lenses (4) adjust the divergence of the laser beams of the diodes. Planar mirrors (5) reflect the beams to convex mirror (2) which further reflects them to the plane of incidence (3). There, the light strip with dimensions (*y*) and (*x*) is created.

Fig. 3 shows the cross section of the optical system of the laser projector for creation of a strip of light as illustrated in Figs. 1 and 2. The diode (1.1) is located in the focus (7) of the lens (4). The laser beam of the diode (1.1) is denoted by dense dotted line. The laser beam passes through the lens (4), then it reflects from the planar mirror (5) and it is incident to the convex mirror (2).

Sparse dotted line denotes aspherical lens (4) in different location and the beam of the diode (1.1) in this situation. In this situation the focus (7) of the lens (4) does not overlap with the diode (1.1).

This laser projector comprises laser diodes, a convex mirror (2) aspherical lenses (4) and planar mirrors (5). The laser projector according to this example of the invention contains at least five laser diodes (1.1 to 1.5). However, it is noted that the present invention is not limited to having five or more diodes. The number of diodes (or diode pairs in this example) determines the length and intensity of the light stripe. An arrangement with three or four diodes may also be employed.

The light of each of the diodes is focused by a corresponding aspherical lens (4). After that, the beams reflect from planar mirrors (5) to the convex mirror (2) which further reflects them to the plane of incidence (3). The desired point of incidence of each beam and its divergence in the dimension (*y*) along the strip of light are adjusted by rotation of the corresponding planar mirrors (5). The projected length of each beam in the dimension (*y*) is denoted as (*y*ᵢ) where "i" is a number from 1 to 5 according to the corresponding diode (1.1 to 1.5). As can be seen in Fig. 1 and 2, the partial stripes with lengths yᵢ overlap to a larger extend with the distance from the laser device growing. This is achieved by the convex mirror arrangement in order to compensate for the lower intensity of the beam in the locations farther from the light source.

In the plane of the incidence, the dimension that is perpendicular to the dimension (y), is denoted as (*x*). In other words, (x) is indicative of the stripe width. The divergence of the beams in this dimension can be set by adjusting the distance between a diode (1.1 to 1.5) and the corresponding aspherical lens (4). The smallest divergence of the beam of a diode (1.1 to 1.5) is achieved when the diode is located in the focus (7) of the corresponding aspherical lens (4). Moving the lens (4) closer or further from the diode increases the divergence. Usually the lens (4) is set in a threaded cylindrical casing. The casing can be screwed into the case that encapsulates the diode (1.1 to 1.5). Then the distance between the lens (4) and the diode (1.1 to 1.5) can be adjusted by screwing and unscrewing the lens casing.

Summarizing, laser light is projected by optical system that comprises aspherical lenses (4), planar mirrors (5) and a convex mirror (2) resulting in creation of intensive strip of light with sharp edges, defined dimensions width (*x*) and length (*y*) with homogenous light intensity distribution on the plane of incidence (3) in a defined distance from the projector.

Homogenous light intensity distribution on the plane of incidence (3) is achieved as follows: the light intensity on the plane of incidence (3) of each laser diode declines with increasing distance from the convex mirror (2). It also declines with increasing divergence of a laser beam. Since some laser diodes illuminate the farther regions of the strip of light on the plane of incidence (3), the light intensity in these regions is smaller. That is why these regions have to be illuminated by more laser diodes than the closer regions. By fine changes of divergence of the beams the intensity can be further adjusted. For this reason the convex mirror (2) is designed such that beams that are reflected to the farther regions of the plane of incidence have smaller divergence than those reflected to the closer regions. This is achieved by the convex mirror (2) having bigger radius of curvature in the parts the "farther" beams are intended to reflect from than in the parts the "closer" beams reflect from.

Generally more than five diodes organized in more than one line can be used. Here presented laser projector is also useful in cases when the plane of incidence (3) is oriented differently or where a shape different from strip needs to be projected or where the light intensity distribution in the projected shape does not need to be homogenous.

In laser projector it is advantageous to organize the laser diodes into lines for the purposes of simpler construction and adjustment. The diodes can be organized in one or more lines. Usually the setup is adjusted such that on the plane of incidence light beams from different lines of diodes completely overlap. In such case each line of diodes increases the light intensity of the resulting strip of light on the plane of incidence. However, the light of each line of laser diodes can be adjusted to hit the plane of incidence independently from the light of the other lines of diodes. Various arrangements of the laser diodes other than lines are also possible.

The unique element of the presented projector is the convex mirror (2). The mirror offers large freedom in setting configurations by turning the planar mirrors (5) and focusing/defocusing the aspherical lenses (4). Thanks to this freedom it is possible to achieve without any other optical elements broad range of sizes, locations and shapes of the light shapes (especially strips of light) projected to variously oriented planes of incidence (3) and with variously distributed light intensity (especially homogeneously distributed). The convex curvature of the mirror (2) increases the divergence of the beams of diodes (1.1 to 1.5) hence they can illuminate bigger areas of the plane of incidence (3) in the close regions than if other curvatures were used (planar or concave).

However, since non-parallel beams reflected from a concave mirror diverge after passing the focus of the mirror, the convex mirror can be replaced by a concave mirror with properly chosen curvature. Obviously, the focal length of the concave mirror must be shorter than the distance between the plane of incidence and the concave mirror.

The curvature of the convex (or concave) mirror is usually cylindrical, but spherical or any aspherical curvatures can also be used.

It is noted that the above laser device illustrated in Figs. 1 to 3 is only exemplary. For instance, the convex mirror does not necessarily have to be a continuous convex plane made of reflexive material. Rather, there may be a set of corresponding mirrors or mirror portions located on beam incidence areas and following the convex plane facing the projection plane and curved along the stripe projection direction y.

Moreover, planar mirrors can be omitted if the diodes are arranged to project beams towards (cf.

Fig. 1 or any other arrangement) the convex mirror following a line on the curved convex plane of the mirror. The planar mirrors merely provide a means for redirecting the beam of light generated by the diodes and thus enable a more compact and robust arrangement of the diodes within the laser device body.

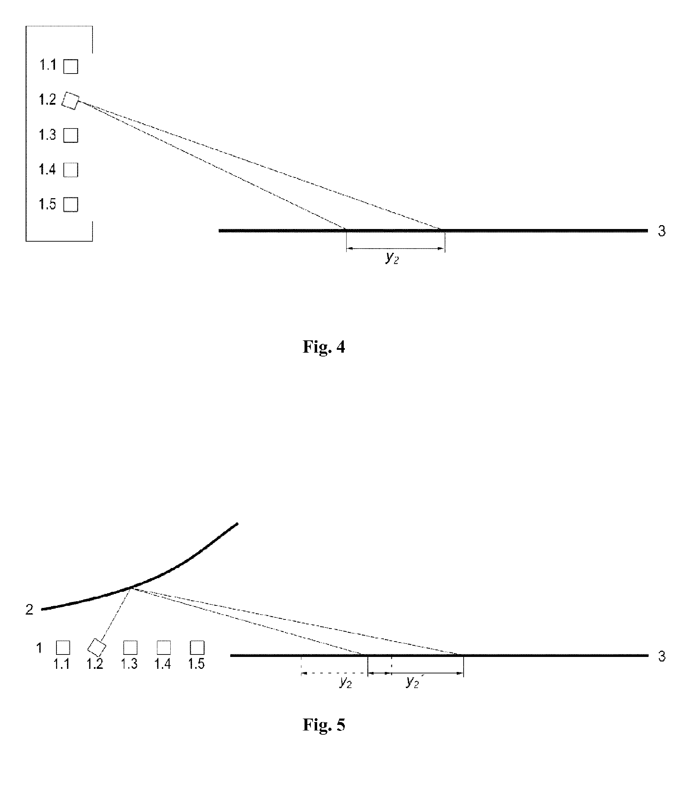

One such alternative setup is depicted in the Fig. 4. The main convex mirror is omitted and the planar mirrors are replaced by convex mirrors projecting the beams into the plane of incidence.

The Fig. 1 shows an actively cooled laser projector for creation of a strip of light. It comprises five laser diode pairs (1.1 to 1.5), i.e. 10 diodes organized in two parallel adjacent lines (rows). Light generated by each of the diode pair passes an individual respective aspheric lens and planar mirror and the two laser diodes are arranged in such a manner that when in operation, their corresponding beams of light substantially overlap. Providing more lines of diodes enables increasing the power of the laser and thus, the intensity of the respective stripe beams.

The sum output power of the diodes is 10W, assuming that one diode has power of ca. 1W. Laser beams of the diodes (1.1 to 1.5) pass aspherical lenses (4), subsequently they reflect from planar mirrors (5) and they are incident to the convex mirror (2). For instance, by means of following procedure strip of light with length 4 m is created 2 m from the projector on the plane of incidence (3).
1. Laser beams of the first diode pair (1.1) reflect from corresponding planar mirrors (5) to the convex mirror (2) which further reflects them to the plane of incidence (3). The desired point where created strip of light should start lies 2 m from the projector. By rotating the corresponding planar mirrors (5) the beams of the diode pair (1.1) can be directed to the desired point. This way the closest part of the strip of light with length (*y*₁) is created.
2. The procedure from point 1. is repeated for the beams of the diode pair (1.5) to be incident to the point on the plane of incidence (3) where the created strip of light should end. This way the farthest part of the strip of light with length (*y*₅) is created.
3. The procedure from point 1. is repeated for the beams of diode pairs (1.2 to 1.4) respectively to fill the area between (*y*₁) and (*y*₅). Homogeneity of the light intensity in the strip of light is achieved by fine visually controlled adjustments of the planar mirrors (5).
4. Finally widths of all beams are synchronized by adjusting aspherical lenses (4) to match the desired width of the strip of light (*x*).

It is noted that the start of the laser beam may be controlled by the position of the planar mirrors and/or by the incidence point and angle of the light from the diode (or diode pair) onto the convex mirror. The length of the beam may be also controlled by the distribution of the diode incident beam on the convex plane (which also influences the homogeneity of the stripe along its length) and by the number of the diodes forming the partial light strips.

Similarly a laser projector with output power 100 W was constructed. Its setup is identical with the projector from the Fig. 1 to the point that further 45 diode pairs (1.6 to 1.50) with corresponding aspherical lenses (4) and planar mirrors (5) were added after diode pair (1.5). Sum output power of this projector is 100 W. The projector is able to create 20 m long and 0.3 m wide strip of light on the plane of incidence (3) 1.5 m from the projector. The projector is located 2 m above the plane of incidence. The temperature of the exemplary projector is not thermoelectrically stabilized. It is cooled only by a heat sink and a fan. Laser beams that create the strip of light have various dimensions (lengths *y*ᵢ) and they are not distributed evenly along the strip. Their distribution is adjusted to ensure homogenous light intensity distribution throughout the strip. For instance, the size of overlapping regions in direction y grows with growing distance from the light source.

Fig. 4 illustrates incidence of a beam from diode 1.2 forming a stripe with a length y₂. The orientation of the diode 1.2 may be controlled by the respective convex mirror located closely to the diode for instance similarly to the planar mirrors 5 in Fig. 2. This arrangement thus includes individual convex mirrors for individual diodes (or diode pairs) which are arranged to project overlapping partial stripes of light to form a larger stripe. These convex mirrors operate as the convex mirror in the above described embodiments.

It is noted that the convex mirror 5 and/or the convex reflection mirrors employed in Fig. 4 may be formed as spherical or cylindrical mirrors. This has the advantage of easy production and availability among standard products. However, particular non-spherical mirrors may also be used and provide improved and better scalable

When the stripe portion y₂ falls onto a convex plane, it is enlarged according to the curving of the convex plane and incidence angle. The larger the curving of the convex plane, the higher is the enlargement. This is illustrated in Fig. 5 in which the change in orientation of the diode may result in changing the location of the strip. Moreover, the change of the orientation of the diode may cause the beam to produce a stripe with a different length, depending on the angle of incidence and mirror curving at the incidence location.

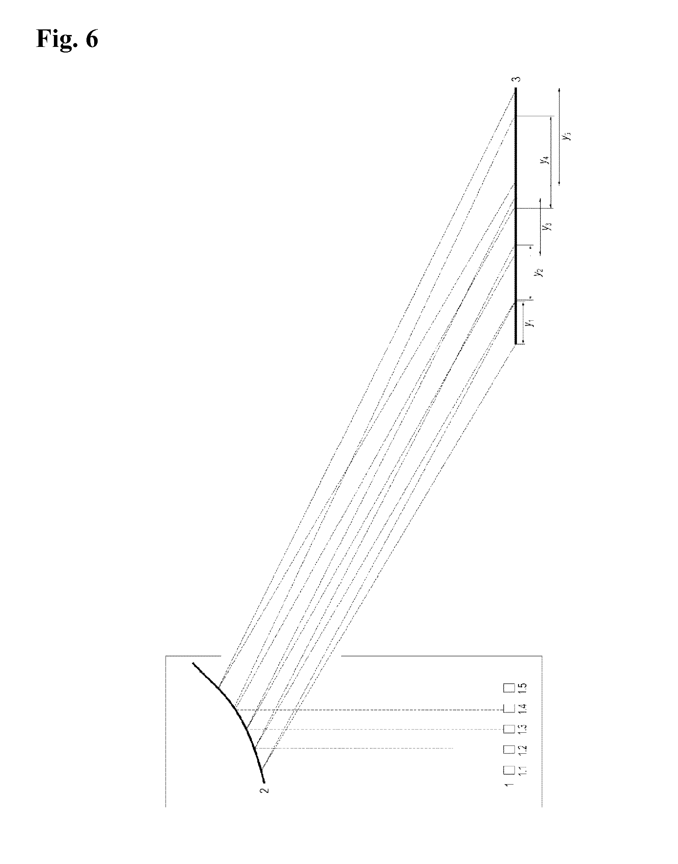

Fig. 6 shows an example of the laser device including the light sources and the convex mirror and the resulting projection of the stripe on a projection plane.

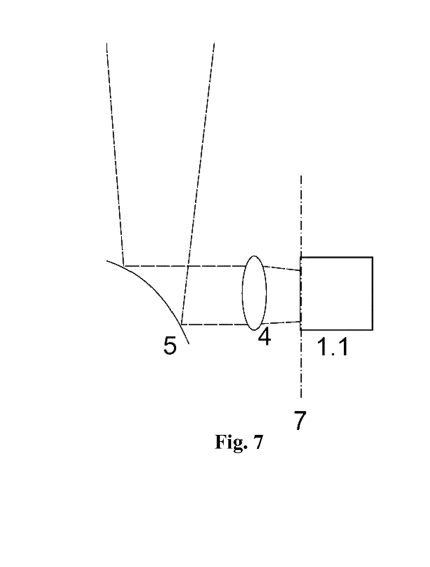

Fig. 7 shows the cross section of the optical system of the laser projector for creation of a strip of light as illustrated in Figs. 4. The diode (1.1) is located near the focus (7) of the lens (4). The laser beam of the diode (1.1) is collimated by the aspherical lens (4), then it reflects from the curved mirror (5) towards the plane of incidence, whereas the curved mirror (5) changes the divergence of the laser beam, mainly in one direction, in order to generate the partial individual strip of light at the plane of incidence. The beams generated by the diodes and reflected from the curved mirror(s) have their axes in one plane so that a resulting strip is formed on the projection plane from the partial strips generated by the respective beams.

In other words according to the embodiment described with reference to Fig. 7, a laser projector is provided for creation of a strip of light that uses laser diodes as light sources wherein the laser beams of the diodes pass through optical system comprising two or more curved mirrors for increasing of divergence of respective incident laser beams generated by the respective laser diodes and arranged to reflect the laser beams to a plane of incidence (3) where they create partially at least overlapping partial strips of light with lengths (*y*₁ to *y*ₙ where n is the number of laser diodes) which together form the resulting strip of light with length (*y*).

It is noted that in all above embodiments, advantageously, the diodes emit light beams into one direction, which means that the axes of the beams are parallel as they are incident on the curved mirrors(s). This may be achieved in that the optical axes of the aspherical lenses are parallel.

After the reflection, the direction of the beams may change according to the curving of the mirror. It is further noted that preferably, the beams (axes of the beams) before the reflection are also located within a plane (for diodes in one line).

Presented invention is useful for indicating borders and important lines in industries, traffic, sport events and advertisement.

## Claims

1. Laser projector for creation of a strip of light, that uses laser diodes as light sources wherein the laser beams of the diodes pass through optical system comprising aspherical lenses (4) and planar mirrors (5) **characterized in that**
it comprises at least five laser diodes (1.1 to 1.5) and a convex mirror (2) for increasing of divergence of incident laser beams generated by the respective at least five laser diodes and arranged to reflect the laser beams onto a plane of incidence (3) where they create partial strips of light with lengths (*y*₁ to *y*₅) which together form the resulting strip of light with length (*y*) and points of incidence of particular light beams and their divergence are adjustable by adjusting their points of incidence on the convex mirror (2) by rotating the planar mirrors (5) and divergence of the beams in the dimension (*x*) is adjustable by setting the distance between aspherical lenses (4) and corresponding laser diodes (1.1 to 1.5).

2. Laser projector according to claim 1, wherein
the laser diodes (1.1 to 1.5) are aligned in a row next to each other so that, when in operation, the respective generated light beams with parallel axes are emitted; where each individual light beam passes an individual aspherical lens and is reflected from an individual planar mirror towards a single curved mirror, respectively;
where the axes of all the individual light beams are located in a single plane after the reflection from the curved mirror (2);
where the individual light beams reflected from the curved mirror form individual partial strips in the plane of projection where they partially or completely overlap.

3. Laser projector for creation of a strip of light, that uses laser diodes as light sources wherein the laser beams of the diodes pass through optical system comprising aspherical lenses (4) and curved mirrors (5) **characterized in that** it comprises at least five laser diodes (1.1 to 1.5) aligned in a row next to each other so that when in operation the respective generated light beams with parallel axes are emitted; where each individual light beam passes an individual aspherical lens and is reflected from an individual curved mirror towards the plane of projection;
where the axes of all the individual light beams are located in a single plane after the reflection from the curved mirrors (5);
where the individual light beams reflected from the curved mirrors (5) form individual partial strips in the plane of projection where they partially or completely overlap.

4. The laser projector according to any of claims 1 to 3 **characterized in that** the laser diodes are organized in two or more lines.
